Europäisches Patentamt

European Patent Office

Office européen des brevets

(11) Numéro de publication: **0 294 005 B1**

# (12) FASCICULE DE BREVET EUROPEEN

(45) Date de publication de fascicule du brevet: **25.05.94**  (51) Int. Cl.⁵: **G02B 7/10**, G02B 13/14

(21) Numéro de dépôt: **88201118.2**

(22) Date de dépôt: **02.06.88**

(54) **Système optique à focale variable et commande électromécanique associée.**

(30) Priorité: **04.06.87 FR 8707797**

(43) Date de publication de la demande:
**07.12.88 Bulletin 88/49**

(45) Mention de la délivrance du brevet:
**25.05.94 Bulletin 94/21**

(84) Etats contractants désignés:
**DE FR GB IT NL SE**

(56) Documents cités:
**FR-A- 2 586 828**
**GB-A- 2 141 260**
**US-A- 4 161 756**

(73) Titulaire: **THOMSON-TRT DEFENSE**
**88, rue Brillat Savarin**
**F-75013 Paris(FR)**

(72) Inventeur: **Perrin, Jean-Claude Société Civile**
**S.P.I.D.**
**209, rue de l'Université**
**F-75007 Paris(FR)**
Inventeur: **Rollin, Joel Société Civile S.P.I.D.**
**209, rue de l'Université**
**F-75007 Paris(FR)**

(74) Mandataire: **Lincot, Georges et al**
**THOMSON-CSF,**
**SCPI,**
**B.P. 329,**
**50, rue Jean-Pierre Timbaud**
**F-92402 Courbevoie Cédex (FR)**

## Description

La présente invention concerne un système optique à focale variable formé à partir de quatre ensembles de lentilles, constitués chacun par une seule lentille, dont un premier ensemble et un deuxième ensemble sont axialement translatés par des moyens de commande électromécanique en fonction d'une commande de changement de focale, d'une commande de focalisation sur un objet situé à une distance allant jusqu'à l'infini et d'une mesure de la température.

Un tel système optique est connu de la demande de brevet FR-2 586 828. Dans cette demande de brevet il est proposé de régler le premier et le deuxième ensemble en fonction de la loi de variation de focale et d'apporter des corrections en température tout en restant focalisé sur l'objet à visualiser. Les moyens décrits semblent être du type continu et impliquent un calcul de la loi de variation de focale. Les corrections en température font appel à des calculs de polynômes du second degré

Un autre système connu est décrit dans la demande de brevet GB-2 141 260. Bien que dans ce système connu on fasse appel à des techniques numériques et que les emplacements soient fixés d'une manière discontinue, aucune indication n'est donnée sur la manière dont est effectuée la compensation en température.

La présente invention propose un système du genre mentionné dans le préambule pour lequel les réglages sont effectués d'une manière étonnamment simple s'affranchissant des lois non linéaires, des variations de focale et n'impliquant donc que très peu d'opérations arithmétiques, il est remarquable en ce que les moyens de commande électromécaniques comportent des mémoires où sont stockées des tables d'une pluralité de valeurs définies par la commande de changement de focale :
- une première table contenant des valeurs de position du premier ensemble à une température de référence et pour un objet situé à l'infini,
- une deuxième table contenant des valeurs de position du deuxième ensemble à ladite température de référence et pour un objet situé à l'infini,
- une troisième table contenant des écarts de position en température à apporter au déplacement du deuxième ensemble,
- une quatrième table contenant des écarts de position de focalisation à apporter au déplacement du deuxième ensemble,

en ce que les moyens de commande électromécanique :
- fixent d'une manière discrète la position des premier et deuxième ensembles à partir des valeurs contenues dans la première et la deuxième table,
- corrigent en température la position du deuxième ensemble à partir de la troisième table et de la température ambiante,
- corrigent en focalisation la position du deuxième ensemble à partir de la quatrième table et de la commande de focalisation.

Ainsi les compensations en température et focalisation rapprochée pour chaque valeur de focale sont effectuées par un seul ensemble de lentilles mobile également utilisé en coopération avec le deuxième ensemble mobile pour assurer les variations de grossissement, de plus les positions des ensembles mobiles pour la température nominale et un objet à l'infini sont stockées pour un nombre discret de valeurs de focales après avoir été calculées de manière à ce que l'oeil ne perçoive pas de changement significatif lors du passage d'un grossissement au suivant. A température nominale et pour un objet à l'infini, il n'y a pas de calcul puisque les valeurs de positions des ensembles de lentilles sont directement récupérées dans des consignes préprogrammées. D'autre part le nombre discret de valeurs de focales est restreint, ce qui entraîne un nombre restreint d'emplacements mémoire lors du stockage des tableaux de valeurs.

Dans un même but de simplification et de réduction des coûts le système optique à focale variable est remarquable en ce que lors du montage dudit système il est effectué un réglage convergent définitif des deux ensembles de lentilles non mobiles de manière à rattraper les défauts de révolution (cambrures des lentilles, épaisseurs) apparus lors de l'usinage des lentilles et les défauts de positionnement des barillets sur lesquels sont montées lesdites lentilles. Ainsi, il est obtenu un desserrement des tolérances relatives à ces défauts et donc un coût de réalisation modéré. Les valeurs de positions des ensembles mobiles stockées en mémoire ne sont par conséquent fixées qu'uniquement relativement à la formule optique théorique et non plus adaptées aux défauts apparus à l'usinage, les valeurs stockées sont alors identiques pour un système de même formule optique. De plus il est obtenu une correction sur toute la gamme de focales.

La description suivante en regard des dessins annexés, donnés à titre d'exemple, fera bien comprendre comment l'invention peut être réalisée.

La figure 1 montre de manière schématique le système optique à focale variable selon l'invention.

La figure 2 représente le schéma de principe du système optique à focale variable.

La figure 3 présente le principe de fonctionnement appliqué pour les corrections de focalisation.

La figure 4 représente le schéma optique de réalisations du système optique selon l'invention.

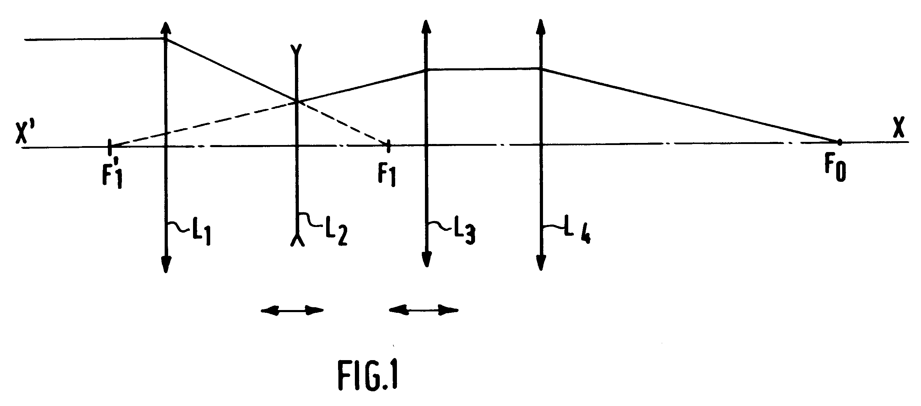

Sur la figure 1 est représenté de manière schématique le système optique à focale variable selon l'invention pour une bonne appréhension de son principe de fonctionnement. Conformément à l'idée de l'invention, le système optique comporte quatre lentilles à un seul élément L1 L2, L3, L4 respectivement, positive, négative, positive et positive. Les lentilles L1 et L4 sont fixes. La variation de focale et par là un effet zoom est obtenu par déplacement des lentilles L2 et L3. Lorsque la lentille L2 se déplace, l'image F'1 du foyer F1 de la lentille L1 donnée par la lentille L2 est translatée sur l'axe optique XX' et le grandissement entre F1 et F'1 varie, provoquant ainsi la variation de focale et donc l'effet zoom. Afin de conserver une image nette quelle que soit la position de la lentille L2, la lentille L3 se déplace également de manière à donner une image de F'1 toujours située au même endroit par rapport à la lentille L4 et donc obtenir une image nette en Fo quelle que soit la position du système. Dans la formule optique calculée, pour la réalisation d'un système optique selon l'invention, l'image de F'1 par la lentille L3 est sensiblement à l'infini dans l'espace intermédiaire entre les lentilles L3 et L4. L'ensemble L1, L2, L3 est donc un système afocal à grossissement variable et la position relativement à la lentille L4 est sensiblement indifférente. Les lois de déplacement des lentilles L2 et L3 en fonction de la focale du système sont obtenues par calcul optique connu en soi. Ce sont des lois par nature non linéaires et les déplacements des lentilles L2 et L3 sont de préférence programmés afin de suivre avec exactitude les lois de déplacement calculées.

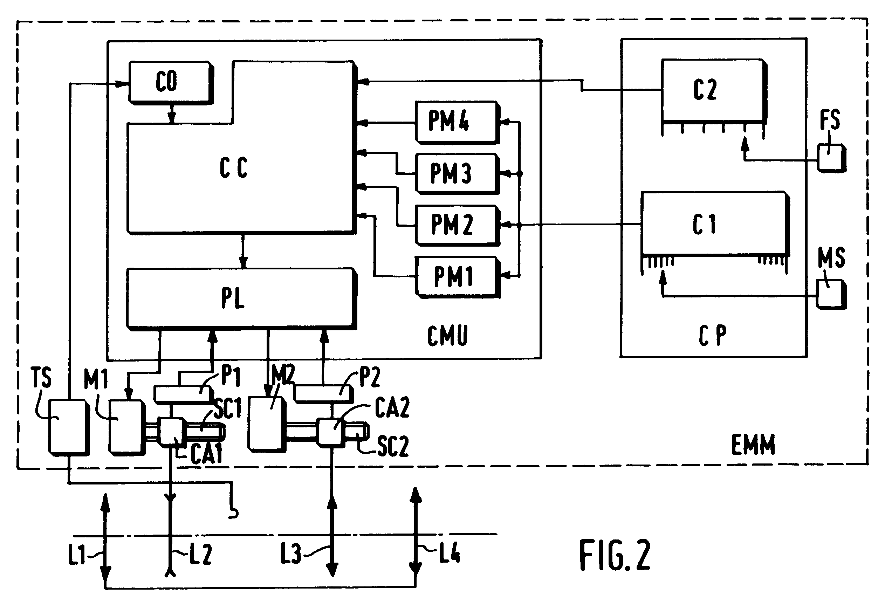

Sur la figure 2 est proposé le schéma de principe du système optique à focale variable pour lequel les éléments communs à la figure 1 sont identiquement référencés. Dans la description qui suit il sera bon de se reporter également au schéma de la figure 1. Dans un système traditionnel, les déplacements des lentilles L2 et L3 sont obtenus au moyen de deux hélices taillées dans un cylindre. Les lentilles L2 et L3 sont ainsi entraînées par des galets qui coulissent dans ces hélices et suivent donc le mouvement qui a été fixé lors de la taille desdites hélices. De plus, la focalisation rapprochée est obtenue généralement par déplacement de la lentille L1, afin que l'image se forme toujours en F1. Pour ce faire, le système est alors muni, à sa périphérie, de deux bagues, l'une utilisée pour faire varier la focale l'autre servant à la focalisation rapprochée, l'image en Fo est de la sorte toujours nette quelle que soit la distance de l'objet.

Pour l'élaboration du système selon l'invention un mode de commande différent a été choisi qui tient compte des critères suivants :

- le système est motorisé et télécommandé.
- le système doit fonctionner dans une large gamme de température par exemple de -40°C à +80°C.
- le système doit fonctionner pour des objets situés de l'infini comme pour des objets rapprochés par exemple de l'infini à 40m.
- la focale réelle du système et donc le champ peuvent varier par rapport à la focale affichée sur le boîtier de commande en fonction de la température et de la focalisation à distance finie.

Ainsi comme cela a été précisé précédemment, les lentilles L1 et L4 sont fixes alors que les lentilles L2 et L3 sont mobiles. Selon une caractéristique de l'invention lors du montage du système optique, il est effectué un réglage convergent définitif des deux lentilles L1 et L4 de manière à rattraper les défauts de révolution (cambrures des lentilles, épaisseurs) apparus lors de l'usinage desdites lentilles et les défauts de positionnement des barillets sur lesquels sont montées ces lentilles.

Conformément à l'idée de l'invention, il a été choisi de plus, de déplacer indépendamment les lentilles L2 et L3, pour cela les moyens électromécaniques EMM comportent en outre deux moteurs M1 et M2 entraînant deux chariots CA1 et CA2 sur lesquels sont fixés les barillets des lentilles L2 et L3, la liaison entre les deux moteurs et les deux chariots étant remarquable en ce qu'elle est réalisée au moyen de deux vis sans jeu SC1 et SC2 (par exemple des vis RV510/8.1. R3, RV510/8.2. R3 ou autres de même type fabriquées par ROLLVIS [Genève]). La position instantanée des lentilles L2 et L3 est mesurée au moyen de deux potentiomètres linéaires P1 et P2 ayant une précision et une linéarité suffisantes dans toute la course utile et dans la gamme de température fixée. Les mesures des potentiomètres P1 et P2 sont transmises aux entrées d'un circuit d'asservissement en position PL faisant partie d'une unité de calcul et de stockage CMU.

Les moyens électromécaniques comportent également un boîtier de commande CP muni de deux boutons de commande. Le premier bouton MS de commande du grossissement donc de la variation de focale, qui dans cet exemple de réalisation non limitatif comprend 32 positions correspondant de préférence à des valeurs de focales équiréparties (l'oeil enregistrant dans ce cas un passage progressif de petit en grand champ), fournit à l'entrée d'un circuit électronique C1 le numéro correspondant à la focale demandée par l'utilisateur, la sortie du circuit C1 étant connectée à un groupe de mémoires de type PROM, PM1, PM2, PM3, PM4 inclus dans l'unité de calcul et de stockage CMU. Le second bouton FS de commande de focalisation, qui dans cet exemple de réalisation comprend 6 positions, fournit à l'entrée d'un circuit électronique C2 le numéro correspondant à la proximité choisie par l'utilisateur, la sortie du circuit C2 étant reliée à une carte de calcul CC incluse dans l'unité de calcul et de stockage CMU. Il est imposé un chevauchement des profondeurs de champ de manière à ne pas perdre l'image d'un détail lorsque le bouton FS de focalisation est déplacé d'une position à la suivante. Chacune des 6 positions du bouton FS correspond à une plage de focalisation, le centre de chaque plage correspondant à l'extrémité de la plage suivante. Dans cet exemple de réalisation la position 0 est relative à un objet situé à l'infini, alors que la position 6 correspond à un objet rapproché (par exemple 40m).

La température est mesurée au moyen d'un (ou plusieurs) capteur de température TS situé à proximité des lentilles, le signal analogique de mesure est converti en numérique au moyen d'un convertisseur analogique-numérique CO situé dans l'unité CMU, le signal ainsi converti est appliqué à une entrée de la carte calcul CC pour fournir l'information relative à l'écart de température par rapport à la température nominale 20°C.

Dans le système optique selon l'invention il a été avantageusement choisi de n'effectuer les corrections relatives à la focalisation en température et à la focalisation à distance finie qu'avec la seule lentille L3. En outre ces corrections peuvent être apportées de manière indépendante. En effet des calculs optiques ont montré que d'une part en ce qui concerne la focalisation en température, à une valeur de focale donnée, les déplacements de L3 en température sont proportionnels à l'écart de température par rapport à la température nominale, le coefficient de proportionnalité ne dépendant pas de la proximité de l'objet et que d'autre part en ce qui concerne la focalisation à distance finie, à une valeur de focale donnée, les déplacements corrigeant la proximité de l'objet sont inversement proportionnels à sa distance et qu'à une valeur de focale donnée, le facteur de proportionnalité ne dépend pas de la température. Les fonctions "correction en température" et "correction en focalisation rapprochée" seront ainsi scindées.

Pour cela, dans les mémoires de type PROM, PM1, PM2, PM3 et PM4, quatre tableaux de 32 éléments ont été stockés (un élément par focale).

- en PM1, un tableau comprenant les 32 valeurs de positions de la lentille L2 à température de 20°C et pour un objet situé à l'infini.
- en PM2, un tableau comprenant les 32 valeurs de positions de la lentille L3 à température de 20°C et pour un objet situé à l'infini.
- en PM3, un tableau répertoriant les écarts de positions de la lentille L3 pour un incrément élémentaire de température $\Delta X3T$, l'objet restant à l'infini.
- en PM4, un tableau répertoriant les écarts de positions de L3 pour un incrément $\Delta X3P$ du bouton de focalisation, pour la température de 20°C.

L'accès à un élément du tableau est autorisé au moyen du bouton MS de commande de variation de focale. Les sorties des 4 mémoires de type PROM sont reliées à des entrées de la carte de calcul CC.

La carte calcul CC est chargée de fournir les informations nécessaires au circuit d'asservissement en position PL, pour l'asservissement en position des lentilles L2 et L3, un premier signal de sortie du circuit PL commandant le moteur M1 et donc le déplacement de la lentille L2, un second signal de sortie du circuit PL commandant le moteur M2 et donc le déplacement de la lentille L3. En sortie de circuit PL sont ainsi obtenues les valeurs X2 et X3 des positions des lentilles L2 et L3 à atteindre par l'asservissement (X2 et X3 étant les abscisses des lentilles L2 et L3 respectivement), valeurs X2 et X3 calculées par conséquent à partir des paramètres appliqués aux entrées :

- écart en température par rapport à 20°C (sortie du circuit CO).
- distance de l'objet (commandée par le bouton FS).
- positions X2 et X3 des lentilles L2 et L3 à 20°C et pour un objet à l'infini.
- incréments élémentaires $\Delta X3T$ et $\Delta X3P$.

De plus des sécurités sont avantageusement imposées dans le logiciel de calcul pour éviter les chocs ou les sorties de course des lentilles qui seraient induits par l'introduction de valeurs erronées à l'asservissement.

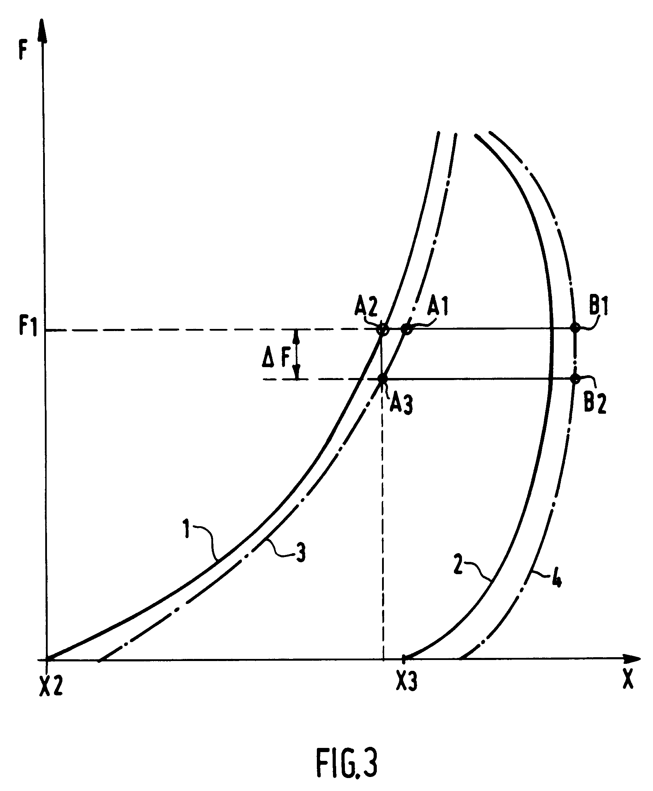

Sur la figure 3 est montré au moyen de courbes le principe de fonctionnement du système pour les corrections de focalisation appliquées selon une caractéristique de l'invention à la seule lentille L3. En outre et selon une autre caractéristique le système optique est remarquable en ce que d'une part les corrections de focalisation en température et de focalisation à distance finie sont traitées en termes de perturbations par rapport à la configuration normale, température T = 20°C et objet situé à l'infini, et d'autre part les corrections de focalisation en température sont décorrelées des corrections de focalisation à distance finie ce qui signifie que pour une température T + $\Delta T$ et un objet à distance finie, il est apporté une première correction en refocalisant pour un objet situé à l'infini à la température T + $\Delta T$, puis une seconde correction en refocalisant en tenant compte de la proximité de l'objet, la température étant alors fictivement

EP 0 294 005 B1

considérée égale à T, et l'unité de calcul étant ainsi sensiblement simplifiée.

En effet, aux valeurs obtenues en fonction des lois de déplacement calculées pour une focalisation à l'infini et pour une température de 20°C, il faut de plus apporter une correction pour d'une part focaliser sur un objet à distance rapprochée et d'autre part tenir compte des variations de température par rapport à 20°C. Pour des températures différentes de 20°C, les valeurs obtenues sont bien entendu différentes et il est possible de tracer un réseau de courbes dépendant de la température. Sur l'axe des abscisses X sont portées les positions X2 de la lentille L2 et X3 de la lentille L3 alors que les valeurs de focale F sont portées par l'axe des ordonnées. X2 et X3 suivent les lois données par le calcul optique en fonction de la focale affichée sur le boîtier de commande CP. Ainsi la courbe 1 représente les variations de X2 (f(X2)) en fonction de l'affichage des focales pour la température T = 20°C et une focalisation à l'infini, de même que la courbe 2 représente les variations de X3 (f(X3)) en fonction de l'affichage des focales à T = 20°C pour un objet situé à l'infini. La courbe 3 correspond aux variations de X2 en fonction des focales affichées pour une température T + ΔT alors que la courbe 4 correspond aux variations de X3 en fonction des focales affichées pour cette même température T + ΔT. A une focale F1 donnée pour la température T + ΔT, les positions théoriques des deux lentilles L2 et L3 sont respectivement A1 et B1. La solution choisie conduit à reprendre fictivement la position X2 correspondant à la focale F1 à la température nominale T = 20°C et la correction en température est apportée par la lentille L3. A1 est alors déplacé en A2 sur la courbe 1 à température T = 20°C. Pour assurer la netteté de l'image A2 est déplacé en A3 sur la courbe 3 à T + ΔT et B1 est déplacé en B2 sur la courbe 4 correspondant à T + ΔT, les positions finales A3 et B2 se trouvant bien ainsi sur le réseau de courbes correspondant à la température réelle T + ΔT. Les rattrapages en focalisation et en température ont bien été effectués avec la seule lentille L3 dont la courbe de variations de positions comporte un point de rebroussement. En effet, lorsqu'il n'est utilisé pour ces rattrapages qu'une seule lentille, les compensations sont obligatoirement effectuées sur la lentille dont la course comporte un point de rebroussement (lentille L3, courbes 2 et 4). Une telle approximation conduit à une légère erreur ΔF entre la focale réelle et la focale affichée sur le boîtier de commande.

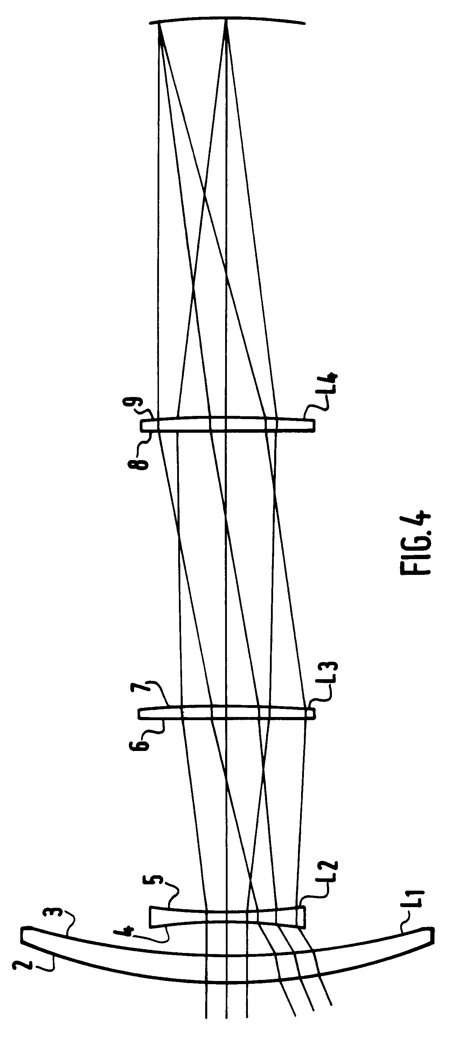

Suivent à titre d'exemples deux réalisations de systèmes optiques selon l'invention dont le schéma optique est proposé à la figure 4. Sur le schéma les systèmes optiques sont configurés en courte focale.

Dans les deux exemples de réalisations suivants le système optique est un objectif zoom conçu pour fonctionner dans la bande spectrale [8 à 12 μm], parfaitement adapté pour être utilisé la nuit monté par exemple sur un hélicoptère équipé pour la recherche de personnes perdues en mer ou en montagne ou toute autre application de ce type.

Selon l'idée de l'invention le système optique est composé de 4 lentilles L1, L2, L3, L4, les surfaces des lentilles étant référencées sur le dessin 2 et 3 pour L1, 4 et 5 pour L2, 6 et 7 pour L3 et 8 et 9 pour L4.

Premier exemple de réalisation : Système à focale variable dont le champ varie d'environ 5° en longue focale à 38° en courte focale (rapport zoom ≈8) et dont les caractéristiques sont énoncées dans le tableau qui suit :

|  | Courte focale | Longue focale |
|---|---|---|
| Domaine spectral | 8-12μm | 8-12μm |
| Focale (mm) | 52,8 | 429,6 |
| Champ horizontal | 37,6° | 4,8° |
| Ouverture numérique | 4,1 | 4,1 |
| Vignettage (%) | 0 | 0 |
| Format image | 24mmx36mm | 24mmx36mm |
| Position de la pupille d'entrée par rapport au premier dioptre (mm) | 52,82 | 134,32 |
| Position de la pupille de sortie par rapport au plan focal (mm) | -222 | -222 |
| Meilleure MTF (Modulation Transfer Function) sur l'axe à la fréquence spatiale de 5mm$^{-1}$ | ≈0,65 | ≈0,7 |

Dans cet exemple de réalisation 3 des 8 surfaces des lentilles sont asphériques et plus précisément sont coniques.

Les données de construction en longue focale sont les suivantes,

| N° de la surface | Rayon | 1/2 Diamètre utile | Matériau suivant | Epaisseur suivante |
|---|---|---|---|---|
| 2 | 172,779 | 58,662 | Ge | 8,659 |
| 3 | conique | 56,929 | Air | 137,533 |
| 4 | conique | 20,191 | Ge | 3,570 |
| 5 | 207,799 | 20,191 | Air | 3,010 |
| 6 | conique | 22,683 | Ge | 3,618 |
| 7 | -434,666 | 22,683 | Air | 16,108 |
| 8 | 1823,132 | 24,874 | Ge | 4,272 |
| 9 | -402,556 | 24,874 | Air | 101,605 |

où "rayon" signifie le rayon de courbure de la surface référencée, "épaisseur suivante" signifie l'intervalle à respecter depuis ladite surface référencée jusqu'à la surface référencée suivante, intervalle mesuré le long de l'axe optique, "rayon", "épaisseur suivante" et "1/2 diamètre utile" sont exprimés en mm.

En prenant pour équation des méridiennes des surfaces asphériques n°3, 4 et 6 par rapport à un système d'axe xOy, dans lequel O est le sommet de la surface et Ox l'axe optique la formule générale suivante,

$$X = \frac{\varrho Y^2}{1 + \sqrt{(1-(K+1)\varrho^2 Y^2)}} + \alpha_2 Y^4 + \alpha_3 Y^6 + \alpha_4 Y^8 + \alpha_5 Y^{10}$$

où X est la flèche et Y la hauteur sur la méridienne,

$\rho = \frac{1}{R}$ = est la courbure de la méridienne au sommet,

K est le coefficient de conicité,

les $\alpha_i$ sont les coefficients d'asphérisation généraux,

les données de construction des surfaces 3, 4 et 6 sont les suivantes :

| | |
|---|---|
| Surface n° 3 : | R = 232,897 |
| | K = -0,3539x10$^{-1}$ |
| | $\alpha_i = 0$; i = 2,...,5 |
| Surface n° 4 : | R = -229,906 |
| | K = -1,0387x10 |
| | $\alpha_i = 0$; i = 2,...,5 |
| Surface n° 6 : | R = 2446,328 |
| | K = -6,9631x10$^3$ |
| | $\alpha_i = 0$; i = 2,...,5 |

Second exemple de réalisation : Système à focale variable dont le champ varie d'environ 10° en longue focale à 24° en courte focale (rapport zoom ≃ 2,4). Les caractéristiques propres à ce système sont énumérées dans le tableau suivant :

| | Courte focale | Longue focale |
|---|---|---|
| Domaine spectral | 8-12 µm | 8-12 µm |
| Focale (mm) | 84,68 | 205,71 |
| Champ horizontal | 24° | 10° |
| Ouverture numérique | 4,1 | 4,1 |
| Vignettage | 0 | 0 |
| Format image | 24mmx36mm | 24mmx36mm |
| Position de la pupille d'entrée par rapport au premier dioptre(mm) | 51 | 83 |
| Position de la pupille de sortie par rapport au plan focal (mm) | -222 | -222 |
| Meilleure MTF (Modulation Transfer Function) sur l'axe à la fréquence spatiale de 5,5mm$^{-1}$ | 0,685 | 0,68 |

Dans cette variante d'exécution les quatre lentilles L1, L2, L3 et L4 ne comportent avantageusement aucune surface asphérique ce qui entraîne une simplification notable de réalisation des optiques. Les données de construction en longue focale sont alors les suivantes :

| N° de la surface | Rayon | 1/2 Diamètre utile | Matériau suivant | Epaisseur suivante |
|---|---|---|---|---|
| 2 | 184,061 | 23,064 | Ge | 7,467 |
| 3 | 271,718 | 21,971 | Air | 12,488 |
| 4 | -268,122 | 17,435 | Ge | 4,975 |
| 5 | 436,944 | 17,170 | Air | 48,633 |
| 6 | -805,109 | 16,619 | Ge | 5,494 |
| 7 | -273,040 | 17,080 | Air | 44,322 |
| 8 | 939,345 | 24,873 | Ge | 6,520 |
| 9 | -597,199 | 25,001 | Air | 121,846 |

où "rayon" signifie le rayon de courbure de la surface référencée, "épaisseur suivante" signifie l'intervalle à respecter depuis ladite surface référencée jusqu'à la surface référencée suivante, intervalle mesuré le long de l'axe optique, "rayon", "épaisseur suivante" et "1/2 diamètre utile" sont exprimés en mm.

Dans ces deux exemples de réalisation les systèmes sont de plus conçus pour fonctionner de -40°C à +80°C, soit 60°C de part et d'autre de la température nominale égale à 20°C, et quelle que soit la focale pour une focalisation rapprochée jusqu'à 40m.

**Revendications**

1. Système optique à focale variable formé à partir de quatre ensembles de lentilles (L1, L2, L3 et L4), constitués chacun par une seule lentille, dont un premier ensemble (L2) et un deuxième ensemble (L3) sont axialement translatés par des moyens de commande électromécanique en fonction d'une commande de changement de focale, d'une commande de focalisation sur un objet situé à une distance allant jusqu'à l'infini et d'une mesure de la température, caractérisé en ce que les moyens de commande électromécaniques comportent des mémoires où sont stockées des tables d'une pluralité de valeurs définies par la commande de changement de focale :
   - une première table contenant des valeurs de position du premier ensemble (L2) à une température de référence (20°C par exemple) et pour un objet situé à l'infini,
   - une deuxième table contenant des valeurs de position du deuxième ensemble (L3) à ladite température de référence et pour un objet situé à l'infini,
   - une troisième table contenant des écarts de position en température ($\Delta X3T$) à apporter au déplacement du deuxième ensemble,
   - une quatrième table contenant des écarts de position de focalisation ($\Delta X3P$) à apporter au déplacement du deuxième ensemble,
   en ce que les moyens de commande électromécanique :
   - fixent d'une manière discrète la position des premier et deuxième ensembles à partir des valeurs contenues dans la première et la deuxième table,
   - corrigent en température la position du deuxième ensemble à partir de la troisième table et de la température ambiante,
   - corrigent en focalisation la position du deuxième ensemble à partir de la quatrième table et de la commande de focalisation.

2. Système optique selon la revendication 1, caractérisé en ce que les emplacements des troisième et quatrième ensembles sont fixés d'une manière définitive lors de son montage.

3. Système optique selon la revendication 1 ou 2, caractérisé en ce que les moyens de commande électromécanique comportent deux moteurs coopérant avec des vis sans jeu entraînant des chariots porteurs du premier et deuxième ensemble respectivement.

8

**4.** Système optique selon la revendication 1 ou 2 ou 3 dans lequel les surfaces des lentilles sont numérotées de 2 à 9 en partant de la face dirigée vers l'objet, caractérisé en ce que les quatre lentilles sont réalisées et ajustées conformément au tableau de valeurs qui suit, dans lequel le mot "rayon" indique le rayon de courbure de la surface référencée, les mots "épaisseur suivante" indiquent l'intervalle à respecter depuis ladite surface référencée jusqu'à la surface référencée suivante, intervalle mesuré le long de l'axe optique, "rayon", "épaisseur suivante" et "1/2 diamètre utile" étant exprimés en mm,

| N° de la surface | Rayon | 1/2 Diamètre utile | Matériau suivant | Epaisseur suivante |
|---|---|---|---|---|
| 2 | 172,779 | 58,662 | Ge | 8,659 |
| 3 | conique | 56,929 | Air | 137,533 |
| 4 | conique | 20,191 | Ge | 3,570 |
| 5 | 207,799 | 20,191 | Air | 3,010 |
| 6 | conique | 22,683 | Ge | 3,618 |
| 7 | -434,666 | 22,683 | Air | 16,108 |
| 8 | 1823,132 | 24,874 | Ge | 4,272 |
| 9 | -402,556 | 24,874 | Air | 101,605 |

alors que les surfaces n°3, 4 et 6 sont ainsi définies :

Surface n°3 : $R = 232,897$

$K = -0,3539 \times 10^{-1}$

$\alpha_i = 0, i = 2,...,5$

Surface n°4 : $R = -229,906$

$K = -1,0387 \times 10$

$\alpha_i = 0; i = 2,...,5$

Surface n°6 : $R = 2446,328$

$K = -6,9631 \times 10^3$

$\alpha_i = 0 \ i = 2,...,5$

où

R désigne le rayon de courbure de la méridienne au sommet,

K désigne le coefficient de conicité,

les $\alpha_i$ désignent les coefficients d'asphérisation généraux.

**5.** Système optique à focale variable selon la revendication 1 ou 2 ou 3 dans lequel les surfaces des lentilles sont numérotées de 2 à 9 en partant de la face dirigée vers l'objet, caractérisé en ce que les quatre lentilles ne comportent aucune surface asphérique et sont réalisées et ajustées conformément au tableau de valeurs qui suit dans lequel le mot "rayon" indique le rayon de courbure de la surface référencée, les mots "épaisseur suivante" indiquent l'intervalle à respecter depuis ladite surface référencée jusqu'à la surface référencée suivante, intervalle mesuré le long de l'axe optique, "rayon", "épaisseur suivante" et 1/2 diamètre utile étant exprimés en mm,

| N° de la surface | Rayon | 1/2 Diamètre utile | Matériau suivant | Epaisseur suivante |
|---|---|---|---|---|
| 2 | 184,061 | 23,064 | Ge | 7,467 |
| 3 | 271,718 | 21,971 | Air | 12,488 |
| 4 | -268,122 | 17,435 | Ge | 4,975 |
| 5 | 436,944 | 17,170 | Air | 48,633 |
| 6 | -805,109 | 16,619 | Ge | 5,494 |
| 7 | -273,040 | 17,080 | Air | 44,322 |
| 8 | 939,345 | 24,873 | Ge | 6,520 |
| 9 | -597,199 | 25,001 | Air | 121,846 |

**EP 0 294 005 B1**

**Claims**

1. Optical system with variable focal length, which system is formed from four groups of lenses (L1, L2, L3 and L4), which groups each consist of a single lens, of which a first group (L2) and a second group (L3) are axially translated by electromechanical command means as a function of a focal length change command, of a command to focus on an object situated at a distance ranging to infinity and of a temperature measurement, characterized in that the electromechanical command means include memories in which tables of a plurality of values defined by the focal length change command are stored:
   - a first table containing values of the position of the first group (L2) at a reference temperature (for example 20 ° C) and for an object situated at infinity,
   - a second table containing values of the position of the second group (L3) at said reference temperature and for an object situated at infinity,
   - a third table containing position deviations in terms of temperature (ΔX3T) to be applied to the displacement of the second group,
   - a fourth table containing deviations of focusing position (ΔX3P) to be applied to the displacement of the second group,
   in that the electromechanical command means:
   - fix, in a discrete manner, the position of the first and second groups on the basis of the values contained in the first and the second table,
   - correct the position of the second group in terms of temperature on the basis of the third table and of the ambient temperature,
   - correct the position of the second group in terms of focusing on the basis of the fourth table and of the focusing command.

2. Optical system according to Claim 1, characterized in that the locations of the third and fourth groups are fixed in a definitive manner when it is assembled.

3. Optical system according to Claim 1 or 2, characterized in that the electromechanical command means include two motors cooperating with screws without play which drive carriages carrying the first and second group respectively.

4. Optical system according to Claim 1 or 2 or 3 in which the surfaces of the lenses are numbered from 2 to 9, starting from the face directed towards the object, characterized in that the four lenses are constructed and adjusted in accordance with the table of values which follows, in which the word "radius" indicates the radius of curvature of the referenced surface, the words "next thickness" indicate the spacing to be observed from said referenced surface to the next referenced surface, this spacing being measured along the optical axis, the "radius", "next thickness" and "1/2 useful diameter" being expressed in mm,

10

| No. of the surface | Radius | 1/2 useful diameter | Next material | Next thickness |
|---|---|---|---|---|
| 2 | 172.779 | 58.662 | Ge | 8.659 |
| 3 | conical | 56.929 | Air | 137.533 |
| 4 | conical | 20.191 | Ge | 3.570 |
| 5 | 207.799 | 20.191 | Air | 3.010 |
| 6 | conical | 22.683 | Ge | 3.618 |
| 7 | -434.666 | 22.683 | Air | 16.108 |
| 8 | 1823.132 | 24.874 | Ge | 4.272 |
| 9 | -402.556 | 24.874 | Air | 101.605 |

while the surfaces No. 3, 4 and 6 are defined thus:

Surface No. 3: $R = 232.897$

     $K = -0.3539 \times 10^{-1}$

     $\alpha_i = 0, i = 2, ..., 5$

Surface No. 4: $R = -229.906$

     $K = -1.0387 \times 10$

     $\alpha_i = 0, i = 2, ..., 5$

Surface No. 6: $R = 2446.328$

     $K = -6.9631 \times 10^3$

     $\alpha_i = 0, i = 2, ..., 5$

where

 $R$ designates the radius of curvature of the meridian at the apex,

 $K$ designates the coefficient of conicity,

 and the values of $\alpha_i$ designate the general coefficients of asphericity.

5. Optical system of variable focal length according to Claim 1 or 2 or 3, in which the surfaces of the lenses are numbered from 2 to 9, starting from the face directed towards the object, characterized in that the four lenses do not include any aspheric surface and are constructed and adjusted in accordance with the table of values which follows, in which the word "radius" indicates the radius of curvature of the referenced surface, the words "next thickness" indicate the spacing to be observed from said referenced surface to the next referenced surface, this spacing being measured along the optical axis, the "radius", "next thickness" and 1/2 useful diameter being expressed in mm,

| No. of the surface | Radius | 1/2 useful diameter | Next material | Next thickness |
|---|---|---|---|---|
| 2 | 184.061 | 23.064 | Ge | 7.467 |
| 3 | 271.718 | 21.971 | Air | 12.488 |
| 4 | -268.122 | 17.435 | Ge | 4.975 |
| 5 | 436.944 | 17.170 | Air | 48.633 |
| 6 | -805.109 | 16.619 | Ge | 5.494 |
| 7 | -273.040 | 17.080 | Air | 44.322 |
| 8 | 939.345 | 24.873 | Ge | 6.520 |
| 9 | -597.199 | 25.001 | Air | 121.846 |

**Patentansprüche**

1. Optisches System mit variabler Brennweite, das ausgehend von vier Linsenbaugruppen (L1, L2, L3 und L4) gebildet ist, die jeweils eine einzige Linse enthalten, wobei eine erste Baugruppe (L2) und eine zweite Baugruppe (L3) von elektromechanischen Steuermitteln in Reaktion auf eine Brennweitenänderungsanweisung, auf eine Anweisung zum Fokussieren auf ein Objekt, das in einer bis ins Unendliche reichenden Distanz liegt, und auf eine Temperaturmessung axial verstellt werden, dadurch gekennzeichnet, daß die elektromechanischen Steuermittel Speicher enthalten, in denen Tabellen mit mehreren Werten gesichert sind, die von der Brennweitenänderungsanweisung bestimmt sind:

- eine erste Tabelle, die die Positionswerte der ersten Baugruppe (L2) bei einer Referenztemperatur (z.B. 20°C) und für ein im Unendlichen liegendes Objekt enthält,
- eine zweite Tabelle, die die Positionswerte der zweiten Baugruppe (L3) bei der Referenztemperatur und für ein im Unendlichen liegendes Objekt enthält,
- eine dritte Tabelle, die die an der Verstellung der zweiten Baugruppe auszuführenden Abweichungen der Position bezüglich der Temperatur ($\Delta$X3T) enthält,
- eine vierte Tabelle, die die an der Verstellung der zweiten Baugruppe auszuführenden Abweichungen der Position bezüglich der Fokussierung ($\Delta$X3P) enthält,

und daß die elektromechanischen Steuermittel

- die Position der ersten und der zweiten Baugruppe ausgehend von in der ersten und in der zweiten Tabelle enthaltenen Werten in diskontinuierlicher Weise festlegen,
- die Position der zweiten Baugruppe hinsichtlich der Temperatur ausgehend von der dritten Tabelle und der Umgebungstemperatur korrigieren,
- die Position der zweiten Baugruppe hinsichtlich der Fokussierung ausgehend von der vierten Tabelle und der Fokussierungsanweisung korrigieren.

2. Optisches System nach Anspruch 1, dadurch gekennzeichnet, daß die Anordnungsstellen der dritten und der vierten Baugruppe bei ihrer Montage endgültig festgelegt werden.

3. Optisches System nach Anspruch 1 oder 2, dadurch gekennzeichnet, daß die elektromechanischen Steuermittel zwei Motoren enthalten, die mit Schrauben zusammenwirken, die spielfrei die erste bzw. die zweite Baugruppe tragende Schlitten antreiben.

4. Optisches System nach Anspruch 1 oder 2 oder 3, bei dem die Flächen der Linsen ausgehend von der dem Objekt zugewandten Seite von 2 bis 9 numeriert sind, dadurch gekennzeichnet, daß die vier Linsen gemäß der folgenden Wertetabelle ausgebildet und eingestellt sind, in der das Wort "Radius" den Krümmungsradius der jeweils angegebenen Fläche und das Wort "Folgeabstand" den einzuhaltenden Zwischenraum zwischen der jeweils angegebenen Fläche und der nachfolgenden, angegebenen Fläche bezeichnet, wobei der Zwischenraum entlang der optischen Achse gemessen wird und wobei "Radius", "Folgeabstand" und "1/2 Nutzdurchmesser" in mm gegeben sind:

| Nr. der Fläche | Radius | 1/2 Nutzdurchmesser | nachfolgendes Material | Folgeabstand |
|---|---|---|---|---|
| 2 | 172,779 | 58,662 | Ge | 8,659 |
| 3 | konisch | 56,929 | Luft | 137,533 |
| 4 | konisch | 20,191 | Ge | 3,570 |
| 5 | 207,799 | 20,191 | Luft | 3,010 |
| 6 | konisch | 22,683 | Ge | 3,618 |
| 7 | -434,666 | 22,683 | Luft | 16,108 |
| 8 | 1823,132 | 24,874 | Ge | 4,272 |
| 9 | -402,556 | 24,874 | Luft | 101,605 |

wobei die Flächen Nr. 3, 4 und 6 wie folgt definiert sind:

Fläche Nr. 3:   $R = 232,897$

$K = -0,3539 \times 10^{-1}$

$\alpha_i = 0; i = 2, ..., 5$

Fläche Nr. 4:   $R = -229,906$

$K = -1,0387 \times 10$

$\alpha_i = 0; i = 2, ..., 5$

Fläche Nr. 6:   $R = 2446,328$

$K = -6,9631 \times 10^{3}$

$\alpha_i = 0; i = 2, ..., 5$

wobei

R den Radius des Scheitelkrümmungskreises des Meridians bezeichnet,

K den Konizitätskoeffizienten bezeichnet, und

$\alpha_i$ die allgemeinen Asphärisationskoeffizienten bezeichnet.

**5.** Optisches System mit variabler Brennweite nach Anspruche 1 oder 2 oder 3, bei dem die Flächen der Linsen ausgehend von der dem Objekt zugewandten Seite von 2 bis 9 numeriert sind, dadurch gekennzeichnet, daß die vier Linsen keine asphärische Fläche enthalten und gemäß der folgenden Wertetabelle ausgebildet und eingestellt sind, in der das Wort "Radius" den Krümmungsradius der jeweils angegebenen Fläche und das Wort "Folgeabstand" den einzuhaltenden Zwischenraum zwischen der jeweils angegebenen Fläche und der nachfolgenden, angegebenen Fläche bezeichnet, wobei der Zwischenraum entlang der optischen Achse gemessen wird und wobei "Radius", "Folgeabstand" und "1/2 Nutzdurchmesser" in mm angegeben sind:

| Nr. der Fläche | Radius | 1/2 Nutzdurchmesser | nachfolgendes Material | Folgeabstand |
|---|---|---|---|---|
| 2 | 184,061 | 23,064 | Ge | 7,467 |
| 3 | 271,718 | 21,971 | Luft | 12,488 |
| 4 | -268,122 | 17,435 | Ge | 4,975 |
| 5 | 436,944 | 17,170 | Luft | 48,633 |
| 6 | -805,109 | 16,619 | Ge | 5,494 |
| 7 | -273,040 | 17,080 | Luft | 44,322 |
| 8 | 939,345 | 24,873 | Ge | 6,520 |
| 9 | -597,199 | 25,001 | Luft | 121,846 |

FIG.1

EP 0 294 005 B1

FIG.2

FIG.3

FIG.4